# FASCICULE DE BREVET EUROPEEN

(11) **EP 3 153 741 B1**
(45) Date de publication et mention de la délivrance du brevet: **25.04.2018**
(21) Numéro de dépôt: 16192008.7
(22) Date de dépôt: 03.10.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 05.10.2015 FR 1559424
(43) Date de publication de la demande: 12.04.2017
(73) Titulaire: Valeo Embrayages, 80009 Amiens Cedex 2 (FR)
(72) Inventeur: CAILLERET, Franck, 80009 AMIENS (FR); HENNEBELLE, Michaël, 80000 AMIENS (FR); SALVADORI, David, 60530 LE MESNIL EN THELLE (FR); VERHOOG, Roel, 60190 GOURNAY SUR ARONDE (FR)
(74) Mandataire: Cardon, Nicolas

(56) Documents cités:
- US-A1- 2013 233 125

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support. Le déplacement par rapport au support de chaque corps pendulaire est généralement guidé par deux organes de roulement coopérant chacun d'une part avec une piste de roulement solidaire du support, et d'autre part avec une ou plusieurs pistes de roulement solidaires du corps pendulaire.

Chaque organe de roulement est alors reçu dans une fenêtre ménagée dans le support et propre à cet organe de roulement, une partie du contour de cette fenêtre formant la piste de roulement solidaire du support. Il est alors nécessaire de réaliser deux fois plus de fenêtres dans le support qu'il n'y a de corps pendulaires. Lorsque chaque corps pendulaire comprend deux masses pendulaires rivetées entre elles et que ces rivets sont chacun reçus dans une ouverture propre et distincte d'une fenêtre précitée, par exemple selon ce qui est divulgué dans la demande DE 10 2006 028 556, le nombre de passages à ménager dans le support augmente encore.

Le dispositif d'amortissement d'oscillations de torsion est par exemple choisi, notamment via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant de façon connue le nombre d'explosions de ce moteur par tour de vilebrequin. De tels dispositifs sont très sensibles à la force de gravité, cette dernière pouvant alors causer des déplacements non souhaités des corps pendulaires, et donc affecter les performances de filtrage. L'état de la technique le plus proche est représenté dans le document US 2013/233125, qui décrit le préambule de la revendication 1.

Il existe ainsi un besoin pour simplifier la réalisation du support d'un dispositif d'amortissement d'oscillations de torsion de type pendulaire, sans affecter les performances de filtrage fournies par ce dispositif.

L'invention vise à répondre à ce besoin, et elle y parvient, selon l'un de ses aspects, à l'aide d'un dispositif d'amortissement d'oscillations de torsion, comprenant :
- un support apte à se déplacer en rotation autour d'un axe,
- une pluralité de corps pendulaires, chaque corps pendulaire étant mobile par rapport au support, et
- une pluralité d'organes de roulement, chaque organe de roulement coopérant avec une première piste de roulement solidaire du support et avec au moins une deuxième piste de roulement solidaire d'un corps pendulaire, le déplacement de chaque corps pendulaire par rapport au support étant guidé par deux de ces organes de roulement,
le support comprenant une pluralité de fenêtres dans chacune desquelles deux organes de roulement sont reçus, l'un de ces organes de roulement coopérant avec au moins une deuxième piste de roulement solidaire d'un des corps pendulaires et l'autre de ces organes de roulement coopérant avec au moins une deuxième piste de roulement solidaire d'un autre de ces corps pendulaires, lesdits corps pendulaires étant voisins circonférentiellement, chacune desdites fenêtres recevant également un organe de rappel élastique interposé entre lesdits corps pendulaires voisins circonférentiellement.

Selon l'invention, chaque fenêtre ménagée dans le support reçoit deux organes de roulement associés à deux corps pendulaires distincts et un organe de rappel élastique agissant entre ces deux corps pendulaires. On réduit ainsi au moins par deux le nombre de fenêtres à ménager dans le support par rapport aux dispositifs selon l'art antérieur. Un tel support est ainsi plus facile à réaliser et sa tenue mécanique peut être améliorée.

En outre, l'interposition de l'organe de rappel élastique entre deux corps pendulaires voisins circonférentiellement permet de limiter le déplacement de ces derniers sous l'effet de la gravité et entrave donc l'action de la gravité sur les corps pendulaires. Lorsque le support tourne, chaque corps pendulaire occupe successivement la position la plus haute autour de l'axe de rotation du support. Un corps pendulaire occupant une telle position interagit via l'organe de rappel élastique avec un autre corps pendulaire qui est plus bas et donc moins soumis à l'action de la gravité. Le déplacement vers le bas du corps pendulaire le plus haut est transmis via l'organe de rappel élastique à cet autre corps pendulaire qui s'oppose alors à ce déplacement vers le bas. Une harmonisation du déplacement des corps pendulaires du dispositif peut ainsi être obtenue.

La présence d'un organe de rappel élastique entre deux corps pendulaires voisins circonférentiellement garantit qu'une distance minimale existe en permanence entre ces deux corps pendulaires. Chaque organe de rappel élastique peut permettre qu'il existe une distance entre les corps pendulaires voisins circonférentiellement qui reste constante pour tous les corps pendulaires du dispositif.

Chacune des fenêtres peut présenter un contour fermé, et une partie de ce contour peut alors définir la première piste de roulement avec laquelle coopère l'un des organes de roulement reçu dans cette fenêtre et guidant le déplacement d'un des corps pendulaires, tandis qu'une autre partie de ce contour définit la première piste de roulement avec laquelle coopère l'autre organe de roulement reçu dans cette fenêtre et guidant le déplacement du corps pendulaire voisin circonférentiellement.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos du dispositif est celle dans laquelle les corps pendulaires sont soumis à une force centrifuge, mais non à des oscillations de torsion provenant des acyclismes du moteur thermique.

Chaque organe de roulement peut coopérer avec la piste de roulement solidaire du support et avec la ou les pistes de roulement solidaires du corps pendulaire uniquement via sa surface extérieure. Ainsi, une même portion de cette surface extérieure peut rouler alternativement sur la piste de roulement solidaire du support et sur une piste de roulement solidaire du corps pendulaire lorsque l'organe de roulement se déplace.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

La forme des premières et des deuxièmes pistes de roulement peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple un nombre compris entre deux et huit, notamment trois ou six corps pendulaires. Le dispositif comprend alors un nombre d'organes de rappel élastique égal au nombre de corps pendulaires. Chaque corps pendulaire du dispositif peut être associé à deux organes de rappel élastique, l'un de ces organes de rappel élastique étant alors interposé entre ce corps pendulaire et le corps pendulaire voisin circonférentiellement dans le sens trigonométrique et l'autre de ces organes de rappel élastique étant alors interposé entre ce corps pendulaire et le corps pendulaire voisin circonférentiellement dans le sens npn-trigonométrique.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Chaque corps pendulaire peut s'étendre angulairement sur une valeur d'angle globale mesurée depuis l'axe de rotation entre deux extrémités circonférentielles qui correspondent aux extrémités circonférentielles des masses pendulaires de ce corps, chaque deuxième piste de roulement étant disposée à l'intérieur d'un secteur angulaire mesuré depuis l'axe de rotation et s'étendant depuis une extrémité circonférentielle du corps pendulaire en direction de l'autre extrémité circonférentielle de ce corps pendulaire, le rapport entre ce secteur angulaire et l'angle global étant compris entre 1/15 et 1/2, étant par exemple compris entre 0,1 et 0, 25. Une telle position des deuxièmes pistes de roulement permet de déporter angulairement chaque organe de roulement le plus vers l'extérieur du corps pendulaire. De cette façon, le mouvement de chaque corps pendulaire est plus précis et plus stable à tolérance de fabrication constante. L'amplitude du débattement de chaque corps pendulaire peut par ailleurs être augmentée. Une telle position des organes de roulement peut encore augmenter l'inertie polaire du corps pendulaire, ce qui est avantageux lorsque ce corps pendulaire présente le mouvement combiné mentionné précédemment.

L'organe de rappel élastique peut être exclusivement reçu dans la fenêtre du support, c'est-à-dire qu'il ne fait pas saillie axialement au-delà de cette fenêtre. En variante, l'organe de rappel élastique fait saillie axialement au moins d'un côté du support.

L'organe de rappel élastique peut être un ressort, tel qu'un ressort hélicoïdal. Il s'agit notamment d'un ressort droit. Lorsque l'organe de rappel élastique est un ressort, , chaque fenêtre du support peut recevoir :
- deux organes de roulement, l'un de ces organes de roulement guidant le déplacement de l'un des deux corps pendulaires voisins circonférentiellement et l'autre de ces organes de roulement guidant le déplacement de l'autre de ces deux corps pendulaires voisins circonférentiellement, et
- un ressort, notamment hélicoïdal.

En variante, l'organe de rappel élastique peut être une lame élastique. Cette lame élastique peut avoir, lorsque le dispositif est au repos, une forme de ligne brisée dans un plan perpendiculaire à l'axe de rotation du dispositif. La lame élastique peut avoir une forme convexe tournée radialement vers l'extérieur, lorsque le dispositif est au repos. La zone de la lame élastique occupant, lorsque le dispositif est au repos, la position radiale la plus extérieure est alors la zone de la lame qui est à mi-distance entre les deux corps pendulaires entre lesquels cette lame élastique est interposée. La lame élastique fait alors radialement saillie vers l'extérieur lorsque le dispositif est au repos. Le bord radialement extérieur de la fenêtre peut présenter une forme telle que la distance minimale entre la lame élastique et ce bord de la fenêtre du support dans laquelle cette lame est reçue soit constante lorsque les corps pendulaires sont centrifugés et qu'ils se déplacent par rapport au support pour filtrer une oscillation de torsion.

En variante, la lame élastique peut avoir une forme convexe tournée radialement vers l'intérieur, lorsque le dispositif est au repos. La zone de la lame élastique occupant, lorsque le dispositif est au repos, la position radiale la plus intérieure est alors la zone de la lame qui est à mi-distance entre les deux corps pendulaires entre lesquels cette lame élastique est interposée. La lame élastique fait alors radialement saillie vers l'intérieur lorsque le dispositif est au repos. Le bord radialement intérieur de la fenêtre peut présenter une forme telle que la distance minimale entre la lame élastique et ce bord de la fenêtre du support dans laquelle cette lame est reçue soit constante lorsque les corps pendulaires sont centrifugés et qu'ils se déplacent par rapport au support pour filtrer une oscillation de torsion. En cas de chute radiale de l'un au moins des deux corps pendulaires entre lesquels cette lame est interposée, qui se produit par exemple lors de l'arrêt du moteur du véhicule, une telle lame élastique faisant saillie radialement vers l'intérieur peut venir en appui contre le bord radialement intérieur de la fenêtre. La lame permet ainsi d'amortir la venue en butée de ce corps pendulaire contre le support lors de cette chute radiale.

La lame élastique peut être réalisée d'une seule pièce. La lame élastique est par exemple réalisée en acier à ressort. En alternative, la lame élastique peut être formée par plusieurs parties distinctes et solidaires, chaque partie étant par exemple réalisée en un matériau donné. La lame élastique est par exemple formée par deux parties distinctes et solidaires, l'une de ces parties étant la plus proche de l'un des deux corps pendulaires voisins circonférentiellement et l'autre de ces parties étant la plus proche de l'autre des deux corps pendulaires voisins circonférentiellement.

L'organe de rappel élastique peut présenter :
- une première partie de montage sur l'un des corps pendulaires voisins circonférentiellement, et
- une deuxième partie de montage sur l'autre des corps pendulaires voisins circonférentiellement, chacune de ces parties de montage étant en appui contre le corps pendulaire correspondant.

Dans ce cas, chaque organe de rappel élastique peut interagir directement avec les corps pendulaires voisins circonférentiellement. Chaque partie de montage peut être reçue avec jeu dans le corps pendulaire correspondant. Ce jeu permet notamment à l'organe de rappel élastique de se déformer et/ou de se déplacer en rotation lorsqu'une oscillation de torsion est filtrée par les deux corps pendulaires entre lesquels cet organe de rappel élastique est interposé. En variante, chaque partie de montage peut être montée sans jeu sur le corps pendulaire correspondant. Aucun mouvement relatif n'est alors possible entre la partie de montage et le corps pendulaire sur lequel elle est montée.

Comme on le verra par la suite, chaque partie de montage est par exemple montée sur un organe de liaison d'un des corps pendulaires voisins circonférentiellement. Dans d'autres exemples, chaque partie de montage peut être montée sur l'une au moins des masses pendulaires de chaque corps pendulaire voisin circonférentiellement, voire sur chaque masse pendulaire de chaque corps pendulaire voisin circonférentiellement. D'autres pièces d'un corps pendulaire peuvent encore porter les parties de montage de l'organe de rappel élastique.

Selon un autre exemple, l'organe de rappel élastique peut présenter :
- une première partie de montage sur un axe porté par l'un des corps pendulaires voisins circonférentiellement, cet axe étant mobile en rotation par rapport à ce corps pendulaire, et
- une deuxième partie de montage sur un axe porté par l'autre des corps pendulaires voisins circonférentiellement, cet axe étant mobile en rotation par rapport à ce corps pendulaire, chacune de ces parties de montage étant en appui contre l'axe correspondant.

Dans ce cas, chaque partie de montage interagit indirectement avec le corps pendulaire correspondant. Chaque axe peut être uniquement mobile en rotation par rapport au corps pendulaire qui le porte. La présence de ces axes mobiles permet de ne pas modifier la cinématique de chaque extrémité circonférentielle des corps pendulaires, tout en pouvant remédier au problème de gravité mentionné précédemment.

Dans tout ce qui précède, chaque corps pendulaire peut comprendre :
- une première et une deuxième masses pendulaires espacées axialement l'une par rapport à l'autre, la première masse pendulaire étant disposée axialement d'un premier côté du support et la deuxième masse pendulaire étant disposée axialement d'un deuxième côté du support, et
- au moins un organe de liaison de la première et de la deuxième masses pendulaires, appariant et solidarisant lesdites masses.

Chaque corps pendulaire comprend par exemple deux organes de liaison appariant chaque masse pendulaire de ce corps, chaque organe de liaison étant solidaire de chacune de ces masses pendulaires.

La première partie de montage d'un organe de rappel élastique peut être en appui, avec ou sans jeu, contre un organe de liaison d'un desdits corps pendulaires voisins circonférentiellement, et la deuxième partie de montage de cet organe de rappel élastique est alors en appui, avec ou sans jeu, contre un organe de liaison de l'autre desdits corps pendulaires voisins circonférentiellement. Une interaction directe de l'organe de rappel élastique avec chacun des corps pendulaires entre lesquels il est interposé via leur organe de liaison se produit alors.

La deuxième piste de roulement solidaire du corps pendulaire peut être définie par l'organe de liaison. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé ou vissé via ses extrémités axiales sur chaque masse pendulaire.

Chaque corps pendulaire peut alors comprendre deux organes de liaison appariant la première et la deuxième masse pendulaires, chaque organe de liaison définissant une deuxième piste de roulement coopérant respectivement avec l'un des deux organes de roulement guidant le déplacement de ce corps pendulaire par rapport au support. Chaque organe de roulement coopère alors avec une seule deuxième piste de roulement.

Dans ce cas, chaque fenêtre recevant deux organes de roulement peut recevoir également un organe de liaison d'un corps pendulaire et un organe de liaison du corps pendulaire voisin circonférentiellement. Dans chaque fenêtre se trouve alors :
- un organe de liaison d'un corps pendulaire et un organe de roulement guidant le déplacement de ce corps pendulaire,
- un organe de liaison d'un autre corps pendulaire et un organe de roulement guidant le déplacement de cet autre corps pendulaire, et
- un organe de rappel élastique ayant une première partie de montage montée sur l'un des organes de liaison présents dans la fenêtre et une deuxième partie de montage montée sur l'autre des organes de liaison présents dans la fenêtre.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Un tel dispositif d'amortissement d'oscillations de torsion présente ainsi un nombre de passages ménagés dans le support très réduit puisque, pour un nombre n de corps pendulaires, n fenêtres permettent le guidage de ces n corps pendulaires, la liaison entre les masses pendulaires de chacun de ces corps pendulaires, et l'harmonisation du déplacement des corps pendulaires. Lorsque les deuxièmes pistes de roulement sont déportées angulairement vers l'extérieur des corps pendulaires, comme mentionné précédemment, ces fenêtres peuvent présenter une dimension angulaire particulièrement réduite.

En variante, chaque organe de roulement peut coopérer avec deux deuxièmes pistes de roulement solidaires du corps pendulaire, l'une de ces deuxièmes pistes de roulement étant définie par la première masse pendulaire et l'autre de ces deuxièmes pistes de roulement étant définie par la deuxième masse pendulaire. Chaque organe de liaison est alors par exemple un rivet, étant reçu dans une ouverture du support différente de la fenêtre dans laquelle un organe de roulement est reçu ou bien dans une fenêtre dans laquelle est déjà reçu un organe de roulement. Chaque organe de roulement peut alors comprendre successivement axialement:
- une portion disposée dans une cavité de la première masse pendulaire et coopérant avec la deuxième piste de roulement formée par une partie du contour de cette cavité,
- une portion disposée dans une fenêtre du support et coopérant avec la première piste de roulement formée par une partie du contour de cette fenêtre, et
- une portion disposée dans une cavité de la deuxième masse pendulaire et coopérant avec la deuxième piste de roulement formée par une partie du contour de cette cavité.

Selon cette variante, chaque corps pendulaire peut comprendre au moins un, notamment deux, organe de liaison appariant la première et la deuxième masses pendulaires, tous les organes de liaison de ce corps pendulaire étant disposés dans l'espace angulaire défini entre les deux organes de roulement guidant le déplacement de ce corps pendulaire par rapport au support. Le ou les organes de liaison peuvent alors être disposés dans la zone centrale, angulairement parlant, du corps pendulaire.

Toujours selon cette variante dans laquelle deux deuxièmes pistes de roulement solidaires du corps pendulaires sont prévues, mais de façon alternative au paragraphe qui précède, il est possible que tout ou partie des organes de liaison du corps pendulaire soient reçus dans des fenêtres recevant déjà des organes de roulement. Chaque fenêtre ménagée dans le support reçoit par exemple alors :
- un organe de liaison d'un corps pendulaire et un organe de roulement guidant le déplacement de ce corps pendulaire,
- un organe de liaison d'un autre corps pendulaire et un organe de roulement guidant le déplacement de cet autre corps pendulaire,
   et
- un organe de rappel élastique ayant une première partie de montage montée sur l'un des organes de liaison présents dans la fenêtre et une deuxième partie de montage montée sur l'autre des organes de liaison présents dans la fenêtre.

Dans ce dernier cas, les organes de roulement peuvent être disposés radialement extérieurement par rapport aux organes de liaison.

Dans tout ce qui précède, le dispositif peut comprendre au moins une pièce d'interposition dont au moins une partie est axialement disposée entre le support et une masse pendulaire du corps pendulaire. La pièce d'interposition est par exemple fixée sur une masse pendulaire ou le support ou formée par un revêtement déposé sur une masse pendulaire ou sur le support. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre.

Dans tout ce qui précède, chaque corps pendulaire peut comprendre au moins un organe d'amortissement de butée contre le support. Chacun de ces organes d'amortissement de butée peut alors venir en contact avec le support pour amortir la butée du corps pendulaire contre ce dernier, par exemple :
- à l'issue d'un déplacement dans le sens trigonométrique de ce corps pendulaire depuis la position de repos, et/ou
- à l'issue d'un déplacement dans le sens non-trigonométrique de ce corps pendulaire depuis la position de repos, et/ou
- en cas de chute radiale du corps pendulaire, par exemple lors de l'arrêt du moteur thermique du véhicule.

Le cas échéant, chaque organe d'amortissement de butée peut amortir la butée du corps pendulaire contre le support à l'issue d'un déplacement dans le sens trigonométrique depuis la position de repos, à l'issue d'un déplacement dans le sens non-trigonométrique depuis la position de repos mais également en cas de chute radiale du corps pendulaire. Un même organe d'amortissement de butée peut ainsi être associé à un corps pendulaire pour amortir tous les contacts précités entre le corps pendulaire et le support.

Chaque organe d'amortissement de butée peut être dédié à un organe de liaison du corps pendulaire et porté par ce dernier. Chaque organe d'amortissement de butée peut alors présenter une forme cylindrique d'axe parallèle à l'axe de rotation du support.

Chaque organe d'amortissement de butée peut présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

L'invention a encore pour objet, selon un autre de ses aspects, un composant pour système de transmission d'un véhicule automobile, le composant étant notamment un double volant amortisseur, un convertisseur de couple hydrodynamique, un disque d'embrayage à friction, un double embrayage humide ou à sec, un simple embrayage humide, un composant de groupe motopropulseur hybride, un volant solidaire d' un vilebrequin, comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention a encore pour objet, selon un autre de ses aspects, un groupe motopropulseur de véhicule comprenant :
- un moteur thermique de propulsion du véhicule, notamment à deux, trois ou quatre cylindres, et
- un composant pour système de transmission tél que défini ci-dessus.

Le cas échéant, un système de désactivation de cylindres peut permettre de ne faire fonctionner le moteur thermique qu'avec certains seulement de ces cylindres actifs. Le moteur peut ainsi présenter un mode de fonctionnement dans lequel seulement deux de ses cylindres sont actifs et les corps pendulaires peuvent alors viser à filtrer l'ordre d'excitation de ce moteur dans ce mode de fonctionnement.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un dispositif d'amortissement d'oscillations de torsion selon un premier exemple de mise en oeuvre de l'invention,
- la figure 2 est un détail de la figure 1, lorsque le dispositif est au repos,
- la figure 3 représente le même détail de la figure 2, lorsque chaque corps pendulaire est en butée contre le support à l'issue d'un déplacement depuis la position de repos de la figure 2,
- les figures 5 à 7 représentent une variante du premier exemple de mise en oeuvre de l'invention, la figure 5 étant similaire à la figure 2, la figure 6 étant similaire à la figure 3, et la figure 7 représentant un cas de chute radiale des corps pendulaires des figures 5 à 7, et

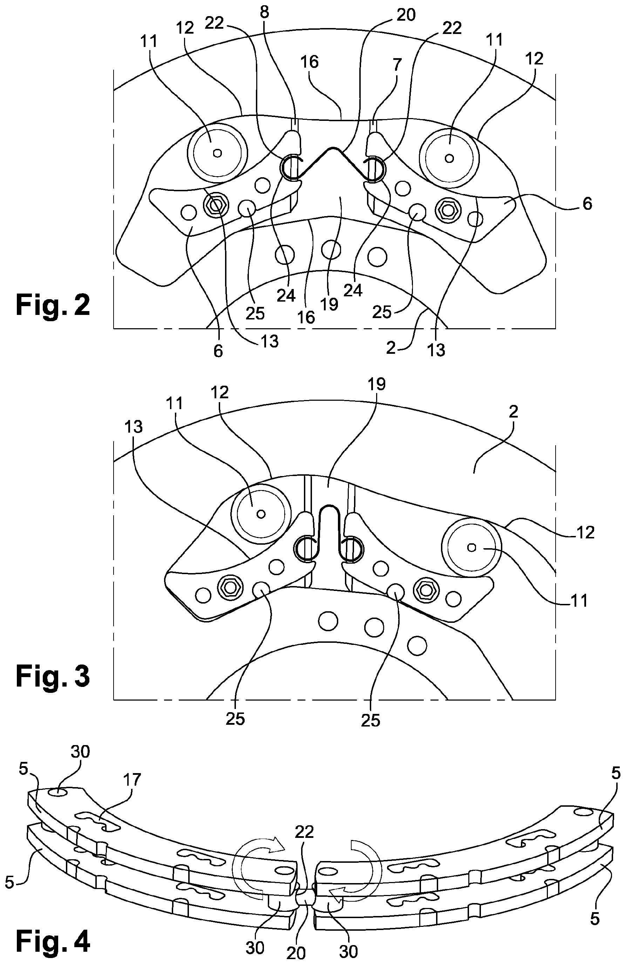

- la figure 4 représente un détail d'un deuxième exemple de mise en oeuvre de l'invention.

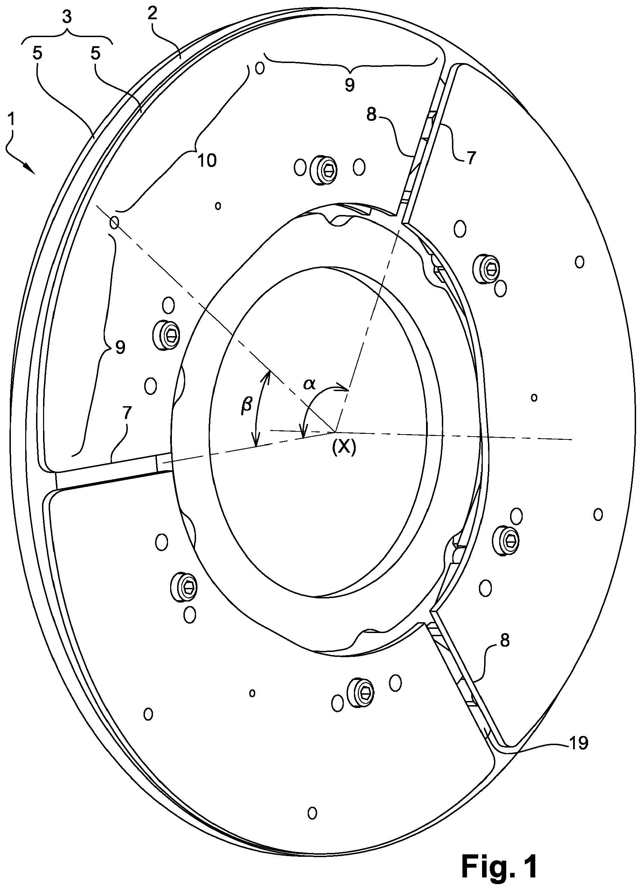

On a représenté sur la figure 1 un dispositif d'amortissement 1 d'oscillations de torsion selon un premier exemple de mise en oeuvre de l'invention.

Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque d'embrayage.

Ce composant peut faire partie d'un groupe motopropulseur d'un véhicule automobile, ce groupe comprenant un moteur thermique notamment à deux, trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Selon les exemples de mise en oeuvre de l'invention qui vont être décrits ultérieurement, le support 2 est unique. On observe par ailleurs sur la figure 1 que trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie,
- un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage. Le support peut encore être autre, par exemple un flasque du composant.

Dans l'exemple considéré, le support 2 présente globalement une forme d'anneau comportant deux côtés opposés 4 qui sont ici des faces planes.

Comme on peut notamment le voir sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Sur les figures 2 et 3, l'une des masses pendulaires 5 n'est pas représentée, de manière à mieux voir le support 2.

Les organes de liaison 6, encore appelés « entretoises », sont dans l'exemple considéré décalés angulairement. Chaque organe de liaison 6 est ici déporté angulairement vers l'extérieur de chaque corps pendulaire 3. Chaque corps 3 s'étend angulairement sur une valeur d'angle globale α mesurée depuis l'axe de rotation X du support 2 entre deux extrémités circonférentielles, qui correspondent respectivement aux extrémités circonférentielles 7 et 8 des masses pendulaires 5 de ce corps, et chaque organe de liaison 6 est alors disposé à l'intérieur d'une zone périphérique 9 du corps pendulaire, cette zone périphérique 9 s'étendant depuis une extrémité 7 ou 8 du corps pendulaire 3 en direction de l'autre extrémité 8 ou 7 de ce corps pendulaire sur un secteur angulaire β mesuré depuis l'axe X, le rapport β/α étant compris entre 1/15 et 1/ 2, étant notamment compris entre 0,1 et 0,25.

Autrement dit, et comme cela est notamment visible sur la figure 1, chaque corps pendulaire 3 comprend dans l'exemple décrit, lorsque l'on se déplace à l'intérieur de ce corps pendulaire 3 depuis une extrémité circonférentielle 7 vers son autre extrémité circonférentielle 8 successivement :
- une zone périphérique 9 dans laquelle est disposé un des organes de liaison 6 du corps pendulaire 3,
- une zone centrale 10 dépourvue d'organe de liaison 6, et
- une autre zone périphérique 9 dans laquelle est disposé l'autre organe de liaison 6 du corps pendulaire 3.

Dans l'exemple de la figure 1, chaque organe de liaison 6 est vissé sur une des masses pendulaires 5 via des vis visibles sur la figure 1 de manière à solidariser ces dernières entre elles. Dans des variantes non représentées, chaque extrémité d'un organe de liaison 6 est emmanchée en force dans une ouverture 17 ménagée dans une des masses pendulaires 5 du corps pendulaire 3, de manière à solidariser entre elles ces deux masses pendulaires 5. Dans d'autres variantes, chaque extrémité d'un organe de liaison est solidarisée à une des masses pendulaires 5 par soudure.

Le dispositif 1 comprend encore des organes de roulement 11 guidant le déplacement des corps pendulaires 3 par rapport au support 2. Les organes de roulement 11 sont ici des rouleaux présentant ou non plusieurs diamètres successifs différents.

Dans l'exemple décrit, le mouvement par rapport au support 2 de chaque corps pendulaire 3 est guidé par deux organes de roulement 11.

Chaque organe de roulement 11 est reçu dans une fenêtre 19 ménagée dans le support 2. Comme représenté sur les figures, deux organes de roulement 11 associés à deux corps pendulaires 3 différents et voisins circonférentiellement sont reçus dans une même fenêtre 19 ménagée dans le support 2. Autrement dit, à l'intérieur d'une même fenêtre 19, est reçu un organe de roulement 11 guidant le déplacement d'un corps pendulaire 3 et un organe de roulement 11 guidant le déplacement d'un autre corps pendulaire 3 qui est circonférentiellement voisin.

Selon l'invention, un organe de rappel élastique 20 est également reçu dans une fenêtre 19, de sorte que chaque fenêtre 19 recevant deux organes de roulement 11 guidant chacun le déplacement d'un des deux corps pendulaires 3 voisins circonférentiellement reçoit également un organe de rappel élastique 20 interposé entre ces deux corps pendulaires 3.

Chaque fenêtre 19 présente un contour fermé 16 et une partie de ce contour 16 définit une première piste de roulement 12 solidaire du support 2, sur laquelle l'un des organes de roulement 11 reçus dans cette fenêtre 19 va rouler, tandis qu'une autre partie de ce contour fermé 16 définit une autre première piste de roulement 12 solidaire du support 2, sur laquelle l'autre organe de roulement 11 reçu dans la fenêtre 19 va rouler.

Dans l'exemple des figures 1 à 3, chaque fenêtre 19 reçoit par ailleurs :
- un organe de liaison 6 d'un corps pendulaire 3, et
- un organe de liaison 6 d'un autre corps pendulaire 3 qui est voisin circonférentiellement.

Chaque organe de liaison 6 définit dans l'exemple des figures 1 à 3 une deuxième piste de roulement 13 qui est solidaire du corps pendulaire 3 auquel cet organe de liaison 6 appartient et sur laquelle roule un des organes de roulement 11 pour guider le déplacement de ce corps pendulaire 3 par rapport au support 2.

Chaque corps pendulaire 3 comprend également deux organes d'amortissement de butée 25 de ce corps pendulaire contre le support 2. Chaque organe d'amortissement de butée 25 d'un corps pendulaire 3 est par exemple radialement positionné entre un organe de liaison 6 et le contour 16 de la fenêtre 19. Chaque organe d'amortissement de butée 25 présente dans l'exemple des figures 1 à 3 une forme cylindrique, ayant une section transversale circulaire dans un plan perpendiculaire à l'axe de rotation X du support. Cet organe d'amortissement de butée 25 s'étend alors entre deux extrémités axiales, chacune d'entre elles étant reçue dans un trou ménagé dans une des masses pendulaires 5, de manière à solidariser cet organe d'amortissement de butée 25 à chacune de ces masses pendulaires 5. En variante, chaque organe d'amortissement de butée 25 est directement porté par l'organe de liaison 6 en regard duquel il est disposé. Chaque organe d'amortissement de butée 25 est par exemple en élastomère.

On va maintenant décrire plus en détail les organes de rappel élastique 20.

Dans l'exemple des figures 1 à 3, chaque organe de rappel élastique 20 est une lame élastique. Cette lame élastique 20 est par exemple réalisée en acier à ressort.. Comme représenté sur la figure 2, lorsque le dispositif 1 est au repos, la lame élastique peut définir, lorsqu'observée selon l'axe de rotation X du support 2, une ligne brisée.. Plus précisément, la lame élastique 20 a, dans l'exemple des figures 1 à 3, une forme convexe tournée radialement vers l'extérieur, la zone de cette dernière qui occupe la position radiale la plus extérieure lorsque le dispositif est au repos étant la zone 23 de cette lame 20 qui est à mi-distance entre les deux corps pendulaires 3 entre lesquels cette lame élastique 20 est interposée.

Chaque extrémité de la lame élastique 20 peut être recourbée et définir une partie de montage 22 sur un des corps pendulaires 3 voisins circonférentiellement entre lesquels cette lame élastique 20 est interposée.

La lame élastique 20 présente dans l'exemple des figures 2 et 3:
- une première partie de montage 22 sur l'un des corps pendulaires 3, et
- une deuxième partie de montage 22 sur l'autre corps pendulaire 3.

Comme on peut le voir, dans l'exemple décrit, chaque partie de montage 22 est montée dans une cavité 24 ménagée dans une face d'extrémité circonférentielle d'un organe de liaison 6. Ainsi, la première partie de montage 22 est montée dans une cavité 24 ménagée dans l'organe de liaison 6 le plus proche de l'extrémité circonférentielle 8 de l'un des deux corps pendulaires 3 tandis que la deuxième partie de montage 22 est montée dans une cavité 24 ménagée dans l'organe de liaison 6 le plus proche de l'extrémité circonférentielle 7 de l'autre des deux corps pendulaires 3.

Dans l'exemple représenté, un jeu existe pour permettre la déformation de chaque partie de montage 22 dans la cavité 24 qui la reçoit.

Ainsi, dans l'exemple des figures 2 et 3, la lame élastique 20 interagit directement avec chacun des corps pendulaires 3 entre lesquels elle est interposée en venant appuyer directement sur un organe de liaison 6 d'un de ces corps pendulaires 3 et en venant appuyer directement sur un organe de liaison 6 de l'autre de ces corps pendulaires 3.

Comme on peut le voir en comparant les figures 2 et 3, la déformation de la lame élastique 20 permet d'harmoniser le déplacement des corps pendulaires 3, ce qui est notamment avantageux lorsque ces corps pendulaires 3 sont configurés pour filtrer l'ordre d'excitation d'un moteur thermique à deux cylindres. L'action des lames élastiques 20 du dispositif 1 permet alors d'entraver l'effet de la gravité sur les corps pendulaires 3.

La figure 4 représente un autre exemple de mise en oeuvre de l'invention. Sur la figure 4, ni le support 2, ni les organes de liaison 6 et ni les organes de roulement 11 ne sont représentés. Selon cet autre exemple de mise en oeuvre de l'invention, chaque organe de rappel élastique 20 est un ressort hélicoïdal.

Ce ressort hélicoïdal s'étend entre deux extrémités, chacune de ces extrémités définissant une partie de montage 22. Une première partie de montage 22 est montée dans un trou borgne d'un axe 30 porté par chaque masse pendulaire 5 de l'un des corps pendulaires voisins circonférentiellement 3 et une deuxième partie de montage 22 est montée dans un trou borgne d'un axe 30 porté par chaque masse pendulaire 5 de l'autre des corps pendulaires voisins circonférentiellement. Le ressort est alors encastré sur chacun de ces deux axes 30.

Dans l'exemple de la figure 4, chaque axe 30 est reçu dans une ouverture 31 ménagée dans la masse pendulaire 5 correspondante de manière à ce que cet axe 30 soit uniquement mobile en rotation par rapport à cette masse pendulaire 5. Le ressort 20 est ainsi monté entre deux axes 30 pivotant.

Dans l'exemple de la figure 4, chaque partie de montage 22 interagit indirectement avec chaque corps pendulaire 3, puisqu'un axe 30 est interposé entre le ressort 20 et un corps pendulaire 3.

Similairement à ce qui a été décrit précédemment, les ressorts 20 du dispositif 1 permettent d'harmoniser le déplacement des corps pendulaires 3 du dispositif 1.

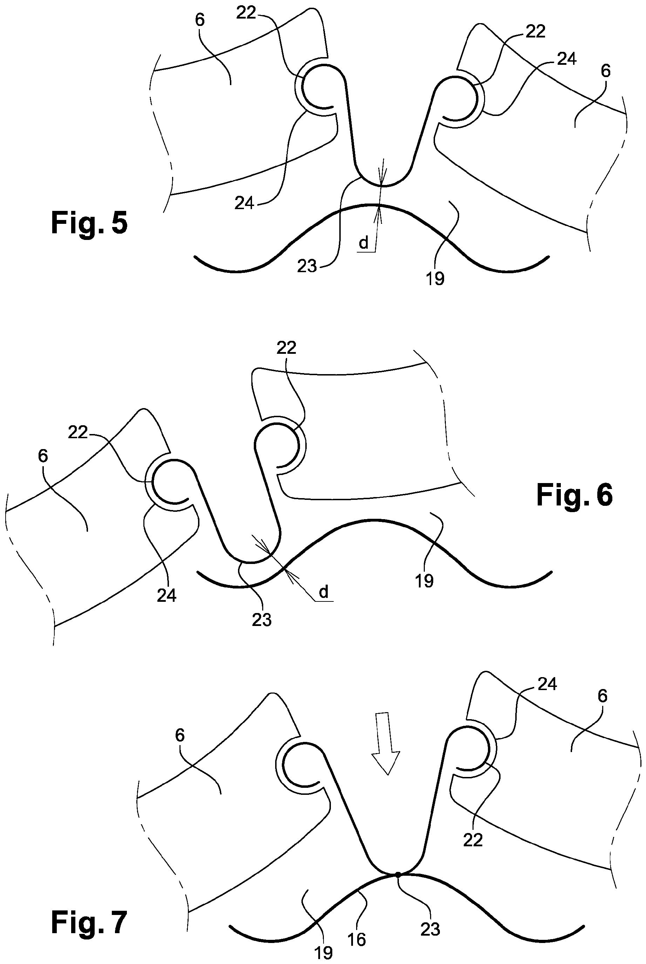

Les figures 5 à 7 représentent une variante de ce qui a été décrit en référence aux figures 1 à 3. Selon cette variante, la lame élastique 20 a une forme convexe tournée radialement vers l'intérieur, lorsque le dispositif est au repos. Comme on peut le constater sur la figure 5, la zone de la lame élastique 20 qui occupe, dans cette position de repos du dispositif, la position radiale la plus intérieure est la zone 23 qui est à mi-distance entre les deux corps pendulaires 3 entre lesquels cette lame élastique 20 est interposée.

Comme on peut le voir sur les figures 5 et 6, le bord radialement intérieur de la fenêtre 19 présente ici une forme telle que la distance minimale d entre la lame élastique 20 et ce bord reste constante lorsque les corps pendulaires 3 sont centrifugés et qu'ils se déplacent par rapport au support 2 pour filtrer une oscillation de torsion.

Sur la figure 7, une chute radiale des corps pendulaires 3 entre lesquels est interposée la lame élastique 20 se produit. Comme on peut le voir, la forme convexe tournée radialement vers l'intérieur de la lame élastique permet à la zone 23 de cette lame 20 d'amortir la venue en butée des corps pendulaires 3 contre le support 2.

L'invention n'est pas limitée aux exemples qui viennent d'être décrit.

On peut ainsi combiner des caractéristiques décrites en rapport avec les figures 1 à 3 ou 5 à 7 avec des caractéristiques décrites en rapport avec la figure 4.

Ainsi, l'invention couvre aussi le cas où un ressort, hélicoïdal ou non, est utilisé avec le dispositif 1 des figures 1 à 3 ou 5 à 7 et elle couvre aussi le cas où une lame élastique est utilisée avec le dispositif 1 de la figure 4.

Dans un autre exemple, chaque organe de roulement 11 coopère avec deux deuxièmes pistes de roulement 13 qui ne sont pas définies par un organe de liaison 6. L'une de ces deuxièmes pistes de roulement 13 est définie par une partie du contour d'une cavité ménagée dans la première masse pendulaire 5 tandis que l'autre de ces deuxièmes pistes de roulement 13 est définie par une partie du contour d'une cavité ménagée dans la deuxième masse pendulaire 5 du corps pendulaire 3.

Chaque organe de roulement 11 comprend alors successivement axialement dans un tel autre exemple:
- une portion disposée dans une cavité de la première masse pendulaire 5 et coopérant avec la deuxième piste de roulement 13 formée par une partie du contour de cette cavité,
- une portion disposée dans une fenêtre 19 du support 2 et coopérant avec la première piste de roulement 12 formée par une partie du contour de cette fenêtre 19, et
- une portion disposée dans une cavité de la deuxième masse pendulaire 5 et coopérant avec la deuxième piste de roulement 13 formée par une partie du contour de cette cavité.

Chaque corps pendulaire 3 comprend alors dans un tel autre exemple des organes de liaison 6 appariant les deux masses pendulaires 5 de ce corps pendulaire 3, mais ces organes de liaison 6 sont différents de ceux décrits en référence aux figures 1 à 4. Les organes de liaison 6 sont alors par exemple des rivets.

## Revendications

1. Dispositif d'amortissement d'oscillations de torsion (1), comprenant :
- un support (2) apte à se déplacer en rotation autour d'un axe (X),
- une pluralité de corps pendulaires (3), chaque corps pendulaire (3) étant mobile par rapport au support (2), et
- une pluralité d'organes de roulement (11), chaque organe de roulement (11) coopérant avec une première piste de roulement (12) solidaire du support (2) et avec au moins une deuxième piste de roulement solidaire (13) d'un corps pendulaire (3), le déplacement de chaque corps pendulaire (3) par rapport au support (2) étant guidé par deux de ces organes de roulement (11),
le support (2) comprenant une pluralité de fenêtres (19) dans chacune desquelles deux organes de roulement (11) sont reçus, **caractérisé en ce que** l'un de ces organes de roulement (11) coopérant avec au moins une
deuxième piste de roulement (13) solidaire d'un des corps pendulaires (3) et l'autre de ces organes de roulement (11) coopérant avec au moins une deuxième piste de roulement (13) solidaire d'un autre de ces corps pendulaires (3), lesdits corps pendulaires (3) étant voisins circonférentiellement,
chacune desdites fenêtres (19) recevant également un organe de rappel élastique (20) interposé entre lesdits corps pendulaires voisins circonférentiellement.

2. Dispositif selon la revendication 1, l'organe de rappel élastique (20) étant un ressort.

3. Dispositif selon la revendication 1, l'organe de rappel élastique (20) étant une lame élastique.

4. Dispositif selon l'une quelconque des revendications précédentes, l'organe de rappel élastique (20) présentant :
- une première partie de montage (22) sur l'un des corps pendulaires (3) voisins circonférentiellement, et
- une deuxième partie de montage (22) sur l'autre des corps pendulaires (3) voisins circonférentiellement,
chacune de ces parties de montage (22) étant en appui contre le corps pendulaire correspondant.

5. Dispositif selon l'une quelconque des revendications 1 à 3, l'organe de rappel élastique (20) présentant :
- une première partie de montage (22) sur un axe (30) porté par l'un des corps pendulaires (3) voisins circonférentiellement, cet axe (30) étant mobile en rotation par rapport à ce corps pendulaire (3), et
- une deuxième partie de montage (22) sur un axe (30) porté par l'autre des corps pendulaires (3) voisins circonférentiellement, cet axe (30) étant mobile en rotation par rapport à ce corps pendulaire (3),
chacune de ces parties de montage (22) étant en appui contre l'axe (30) correspondant.

6. Dispositif selon l'une quelconque des revendications précédentes, chaque corps pendulaire (3) comprenant :
- une première et une deuxième masses pendulaires (5) espacées axialement l'une par rapport à l'autre, la première masse pendulaire (5) étant disposée axialement d'un premier côté (4) du support (2) et la deuxième masse pendulaire (5) étant disposée axialement d'un deuxième côté (4) du support (2), et
- au moins un organe de liaison (6) de la première et de la deuxième masses pendulaires (5), appariant et solidarisant lesdites masses.

7. Dispositif selon les revendications 4 et 6, la première partie de montage (22) d'un organe de rappel élastique (20) étant en appui contre un organe de liaison (6) d'un desdits corps pendulaires (3) voisins circonférentiellement, et la deuxième partie de montage (22) de cet organe de rappel élastique (20) étant en appui contre un organe de liaison (6) de l'autre desdits corps pendulaires (3) voisins circonférentiellement.

8. Dispositif selon la revendication 7, la deuxième piste de roulement (13) solidaire du corps pendulaire (3) étant définie par l'organe de liaison (6).

9. Dispositif selon la revendication 7, chaque organe de roulement (11) coopérant avec deux deuxièmes pistes de roulement (13) solidaires du corps pendulaire (3), l'une de ces deuxièmes pistes de roulement (13) étant définie par la première masse pendulaire (5) et l'autre de ces deuxièmes pistes de roulement (13) étant définie par la deuxième masse pendulaire (5).

10. Composant pour système de transmission d'un véhicule automobile, le composant étant notamment un double volant amortisseur, un convertisseur de couple hydrodynamique ou un disque d'embrayage à friction, comprenant un dispositif d'amortissement (1) selon l'une quelconque des revendications 1 à 9.

11. Groupe motopropulseur de véhicule comprenant :
- un moteur thermique de propulsion du véhicule à deux cylindres, et
- un composant pour système de transmission selon la revendication 10.

## Patentansprüche

1. Vorrichtung zur Torsionsschwingungsdämpfung (1), umfassend:
- einen Träger (2), der in der Lage ist, eine Drehbewegung um eine Achse (X) auszuführen,
- mehrere Pendelkörper (3), wobei jeder Pendelkörper (3) bezüglich des Trägers (2) beweglich ist, und
- mehrere Wälzkörper (11), wobei jeder Wälzkörper (11) mit einer ersten Rollbahn (12), die mit dem Träger (2) fest verbunden ist, und mit wenigstens einer zweiten Rollbahn (13) eines Pendelkörpers (3) zusammenwirkt, wobei die Bewegung jedes Pendelkörpers (3) bezüglich des Trägers (2) von zweien dieser Wälzkörper (11) geführt wird,
wobei der Träger (2) mehrere Fenster (19) umfasst, in denen jeweils zwei Wälzkörper (11) aufgenommen sind,
**dadurch gekennzeichnet, dass** einer dieser Wälzkörper (11) mit wenigstens einer zweiten Rollbahn (13) zusammenwirkend, die mit einem der Pendelkörper (3) fest verbunden ist, und der andere dieser Wälzkörper (11) mit wenigstens einer zweiten Rollbahn (13) zusammenwirkend, die mit einem anderen dieser Pendelkörper (3) fest verbunden ist, wobei die Pendelkörper (3) in Umfangsrichtung benachbart sind,
wobei jedes der Fenster (19) außerdem ein elastisches Rückholorgan (20) aufnimmt, das zwischen den in Umfangsrichtung benachbarten Pendelkörpern (3) angeordnet ist.

2. Vorrichtung nach Anspruch 1, wobei das elastische Rückholorgan (20) eine Feder ist.

3. Vorrichtung nach Anspruch 1, wobei das elastische Rückholorgan (20) eine Federzunge ist.

4. Vorrichtung nach einem der vorhergehenden Ansprüche, wobei das elastische Rückholorgan (20) aufweist:
- einen ersten Abschnitt zur Anbringung (22) an einem der in Umfangsrichtung benachbarten Pendelkörper (3) und
- einen zweiten Abschnitt zur Anbringung (22) an dem anderen der in Umfangsrichtung benachbarten Pendelkörper (3),
wobei jeder dieser Anbringungsabschnitte (22) an dem entsprechenden Pendelkörper anliegt.

5. Vorrichtung nach einem der Ansprüche 1 bis 3, wobei das elastische Rückholorgan (20) aufweist:
- einen ersten Abschnitt zur Anbringung (22) an einer Achse (30), die von einem der in Umfangsrichtung benachbarten Pendelkörper (3) getragen wird, wobei diese Achse (30) drehbeweglich bezüglich dieses Pendelkörpers (3) ist, und
- einen zweiten Abschnitt zur Anbringung (22) an einer Achse (30), die von dem anderen der in Umfangsrichtung benachbarten Pendelkörper (3) getragen wird, wobei diese Achse (30) drehbeweglich bezüglich dieses Pendelkörpers (3) ist,
wobei jeder dieser Anbringungsabschnitte (22) an der entsprechenden Achse (30) anliegt.

6. Vorrichtung nach einem der vorhergehenden Ansprüche, wobei jeder Pendelkörper (3) umfasst:
- eine erste und eine zweite Pendelmasse (5), die axial voneinander beabstandet sind, wobei die erste Pendelmasse (5) axial auf einer ersten Seite (4) des Trägers (2) angeordnet ist und die zweite Pendelmasse (5) axial auf einer zweiten Seite (4) des Trägers (2) angeordnet ist, und
- wenigstens ein Organ zur Verbindung (6) der ersten und der zweiten Pendelmasse (5), welches diese Massen paart und fest miteinander verbindet.

7. Vorrichtung nach den Ansprüchen 4 und 6, wobei der erste Anbringungsabschnitt (22) eines elastischen Rückholorgans (20) an einem Verbindungsorgan (6) eines der in Umfangsrichtung benachbarten Pendelkörper (3) anliegt und der zweite Anbringungsabschnitt (22) dieses elastischen Rückholorgans (20) an einem Verbindungsorgan (6) des anderen der in Umfangsrichtung benachbarten Pendelkörper (3) anliegt.

8. Vorrichtung nach Anspruch 7, wobei die zweite Rollbahn (13), die mit dem Pendelkörper (3) fest verbunden ist, durch das Verbindungsorgan (6) definiert ist.

9. Vorrichtung nach Anspruch 7, wobei jeder Wälzkörper (11) mit zwei zweiten Rollbahnen (13) zusammenwirkt, die mit dem Pendelkörper (3) fest verbunden sind, wobei eine dieser zweiten Rollbahnen (13) durch die erste Pendelmasse (5) definiert ist und die andere dieser zweiten Rollbahnen (13) durch die zweite Pendelmasse (5) definiert ist.

10. Komponente für ein Kraftübertragungssystem eines Kraftfahrzeugs, wobei die Komponente insbesondere ein Zweimassen-Dämpfungsschwungrad, ein hydrodynamischer Drehmomentwandler oder eine Reibkupplungsscheibe ist und eine Dämpfungsvorrichtung (1) nach einem der Ansprüche 1 bis 9 umfasst.

11. Antriebsaggregat eines Fahrzeugs, umfassend:
- einen Verbrennungsmotor zum Antrieb des Fahrzeugs mit zwei Zylindern, und
- eine Komponente für ein Kraftübertragungssystem nach Anspruch 10.

## Claims

1. Device (1) for damping torsion oscillations, comprising:
- a support (2) able to move rotationally about an axis (X),
- a plurality of pendular bodies (3), each pendular bodu (3) being movable with respect to the support (2), and
- a plurality of rolling members (11), each rolling member (11) cooperating with a first rolling track (12) secured to the support (2) and with at least one second rolling track (13) secured to a pendular body (3), the movement of each pendular body (3) with respect to the support (2) being guided by two of these rolling members (11),
the support (2) comprising a plurality of apertures (19) in each of which two rolling members (11) are received, **characterized in that** one of these rolling members (11) cooperating with at least one second rolling track (13) secured to one of the pendular bodies (3) and the other of these rolling members (11) cooperating with at least one second rolling track (13) secured to another of these pendular bodies (3), the said pendular bodies (3) being circumferentially adjacent,
each of the said apertures (19) also receiving an elastic return member (20) interposed between the said circumferential adjacent pendular bodies.

2. Device according to Claim 1, the elastic return member (20) being a spring.

3. Device according to Claim 1, the elastic return member (20) being an elastic strip.

4. Device according to any one of the preceding claims, the elastic return member (20) having:
- a first part (22) for mounting on one of the circumferentially adjacent pendular bodies (3), and
- a second part (22) for mounting on the other of the circumferentially adjacent pendular bodies (3), each of these mounting parts (22) bearing against the corresponding pendular body.

5. Device according to any one of Claims 1 to 3, the elastic return member (20) having:
- a first part (22) for mounting on an axle (30) borne by one of the circumferentially adjacent pendular bodies (3), this axle (30) being movable rotationally with respect to this pendular body (3), and
- a second part (22) for mounting on an axle (30) borne by the other of the circumferentially adjacent pendular bodies (3), this axle (30) being movable rotationally with respect to this pendular body (3), each of these mounting parts (22) bearing against the corresponding axle (30).

6. Device according to any one of the preceding claims, each pendular body (3) comprising:
- first and second pendular masses (5) spaced apart axially with respect to one another, the first pendular mass (5) being arranged axially on a first side (4) of the support (2) and the second pendular mass (5) being arranged axially on a second side (4) of the support (2), and
- at least one member (6) for connecting the first and the second pendular masses (5), which member pairs and secures the said masses.

7. Device according to Claims 4 and 6, the first mounting part (22) of an elastic return member (20) bearing against a member (6) for connecting one of the said circumferentially adjacent pendular bodies (3), and the second mounting part (22) of this elastic return member (20) bearing against a member (6) for connecting the other of the said circumferentially adjacent pendular bodies (3).

8. Device according to Claim 7, the second rolling track (13) secured to the pendular body (3) being defined by the connecting member (6).

9. Device according to Claim 7, each rolling member (11) cooperating with two second rolling tracks (13) secured to the pendular body (3), one of these second rolling tracks (13) being defined by the first pendular mass (5) and the other of these second rolling tracks (13) being defined by the second pendular mass (5).

10. Component for a motor vehicle transmission system, the component being in particular a dual mass flywheel, a hydrodynamic torque converter or a friction clutch disc, comprising a damping device (1) according to any one of Claims 1 to 9.

11. Vehicle propulsion unit comprising:
- a combustion engine for vehicle propulsion with two cylinders, and
- a component for a transmission system according to Claim 10.
